# NEUE EUROPÄISCHE PATENTSCHRIFT

(11) **EP 2 394 010 B2**
(45) Veröffentlichungstag und Bekanntmachung des Hinweises auf die Entscheidung über den Einspruch: **19.04.2017**
(45) Hinweis auf die Patenterteilung: 02.10.2013
(21) Anmeldenummer: 10712403.4
(22) Anmeldetag: 29.03.2010
(51) Int. Cl.: B60J 5/04, E05F 11/38, E05F 11/48

(54) **TÜRMODUL FÜR EINE KRAFTFAHRZEUGTÜR MIT EINER FENSTERHEBERANORDNUNG**
DOOR MODULE FOR A MOTOR VEHICLE DOOR COMPRISING A WINDOW LIFTER ASSEMBLY
MODULE DE PORTE DE VÉHICULE AUTOMOBILE DOTÉ D'UN SYSTÈME DE LÈVE-VITRE

(30) Priorität: 20.04.2009 DE 102009002491
(43) Veröffentlichungstag der Anmeldung: 14.12.2011
(73) Patentinhaber: Faurecia Innenraumsysteme GmbH, 76767 Hagenbach (DE)
(72) Erfinder: ECKHARDT, Rolf, 57518 Betzdorf (DE); ECKHARDT, Bernhard, 35578 Wetzlar (DE); AUFMKOLK, Rudolf, 64560 Riedstadt (DE)
(74) Vertreter: Richardt Patentanwälte PartG mbB
(86) Internationale Anmeldenummer: PCT/EP2010/054061
(87) Internationale Veröffentlichungsnummer: WO 2010/121883

(56) Entgegenhaltungen:
- EP-A1- 1 698 503
- WO-A1-02/088502
- WO-A1-2008/112750
- FR-A1- 2 830 894

## Beschreibung

Die Erfindung betrifft ein Türmodul für eine Kraftfahrzeugtür mit einer Fensterheberanordnung und eine Kraftfahrzeugtür.

Aus dem Stand der Technik sind verschiedene Türmodule für Kraftfahrzeugtüren bekannt. Beispielsweise offenbart die DE 199 44 965 A1 ein Türmodul für einen Schienenfensterheber. Ein schienenloser Fensterheber ist aus der WO 2007/014822 A1 bekannt. Führungsschienen für Fensterheber sind beispielsweise aus der WO 98/50658 sowie der EP 0686750 B1 und der DE 10 2007 016 953 A1 bekannt.

Ferner ist aus EP 1 698 503 A1 ein Modul für Kraftfahrzeugtüren bekannt, das charakteristisch dafür ist, dass die Schienen unabhängig von den Umlenkstükken sind. Das Trägermodul für Fahrzeugtüren umfasst eine Bauplatte mit integrierten Befestigungselementen zur Befestigung der Schienen eines Fensterheber-Mechanismus, dadurch gekennzeichnet, dass sie mindestens eine Schiene umfasst unabhängig von den Umlenkstücken an den Enden der Schiene.

Der Erfindung liegt demgegenüber die Aufgabe zugrunde, ein verbessertes Türmodul für eine Kraftfahrzeugtür mit einer Fensterheberanordnung, eine verbesserte Kraftfahrzeugtür und ein umlenkrollenloses Führungselement für eine Fensterheberanordnung eines Kraftfahrzeugs zu schaffen.

Die der Erfindung zugrundeliegenden Aufgaben werden mit den Merkmalen des unabhängigen Patentanspruchs gelöst. Bevorzugte Ausführungsformen der Erfindung sind in den abhängigen Patentansprüchen angegeben.

Es wird ein Türmodul für eine Kraftfahrzeugtür mit einer Fensterheberanordnung geschaffen, wobei die Fensterheberanordnung zumindest zwei Umlenkstücke, zumindest ein Führungselement und zumindest einen Mitnehmer für eine Fensterscheibe aufweist, wobei das Türmodul zumindest ein Befestigungselement aufweist, wobei das Führungselement durch das Befestigungselement aufgenommen ist, wobei das Führungselement zur Führung einer Bewegung des Mitnehmers ausgebildet ist, wobei der Mitnehmer über ein beziehungsweise mehrere über die Umlenkstücke umgelenktes Seil/e mit einem Fensterheberantrieb verbunden ist, wobei die Umlenkstücke separat von dem Führungselement am Türmodul angeordnet sind.

Es sei angemerkt, dass im Folgenden unter Umlenkstück sowohl ein statisches Umlenkelement, als auch bewegliche Umlenkelemente wie z.B. Umlenkrollen verstanden werden.

Ausführungsformen der Erfindung haben den Vorteil, dass ein solches Türmodul in kostengünstiger Weise herstellbar ist, da insbesondere das Führungselement und das Befestigungselement mechanisch weitaus weniger stabil ausgestaltet sein muss als dies im Stand der Technik für Schienenfensterheber beispielsweise gefordert ist. Dies liegt darin begründet, dass im Stand der Technik Rollen bzw. Umlenkstücke direkt am Führungselement selbst angebracht sind, sodass die bei Betätigung des Fensterhebers über die Fensterheberseile wirkende Kräfte von den Umlenkelementen direkt auf das Führungselement übertragen werden. In anderen Worten muss nach dem Stand der Technik das Führungselement bei Betätigung des Fensterhebers sehr hohe Kräfte aufnehmen, was eine mechanisch hochstabile Ausgestaltung des Führungselements zusammen mit den Umlenkelementen erfordert. Da jedoch die Umlenkelemente im vorliegenden Fall nicht am Führungselement selbst, sondern separat von dem Führungselement am Türmodul angeordnet sind, werden auf die Umlenkelemente wirkende Kräfte direkt auf das Türmodul übertragen und damit das Führungselement entlastet. Dem Führungselement kommt damit lediglich eine "einfache" Führungsfunktion des Mitnehmers der Fensterscheibe zu, nämlich insofern, dass das Führungselement lediglich die Position des Mitnehmers über den Verfahrweg der Scheibe definiert.

Ein weiterer Vorteil von Ausführungsformen der Erfindung ist, dass aufgrund der separaten Ausgestaltung von Befestigungselement und Führungselement eine kostengünstige Herstellung des Türmoduls möglich ist. So kommt im vorliegenden Fall dem Befestigungselement lediglich eine Halterungsfunktion für das Führungselement zu, sodass die geometrische Ausgestaltung des Befestigungselements optimiert für die Herstellung z.B. in einem Spritzgussverfahren werden kann.

Damit kann in einem ersten Herstellungsverfahren beispielsweise zunächst das Türmodul hergestellt werden. In einem zweiten Herstellungsverfahren wird separat davon dass Führungselement hergestellt, und in einem dritten Verfahren werden Führungselement und Befestigungselement des Türmoduls zusammengefügt, was insgesamt die Fensterheberanordnung ergibt.

Im Gegensatz zu herkömmlichen Fensterhebersystemen muss außerdem das Führungselement nicht direkt auf das Türmodul selbst aufgebracht werden und mit diesem verschraubt werden, welches zu diesem Zweck üblicherweise entsprechende Befestigungslöcher aufweist. Nach Befestigung muss im Stand der Technik zusätzlich die Wasserdichtheit dieser Befestigungsstellen gewährleistet werden, um eine Trennung zwischen Nass- und Trockenraum der Fahrzeugtüre zu bewirken. Diese Schritte entfallen jedoch aufgrund der separaten Ausgestaltung von Befestigungselement und Führungselement.

Ein weiterer Vorteil der separaten Ausgestaltung von Befestigungselement und Führungselement ist, dass eine optimierte Gleitpaarung "Mitnehmer zu Führungselement" erhalten werden kann, da hinsichtlich des Herstellungsverfahrens des Führungselements eine Abstimmung auf die Materialwahl des Türmoduls selbst entfällt. In anderen Worten muss bei der Materialwahl des Türmoduls nicht mehr darauf abgestellt werden, ob das Türmodulmaterial auch optimierte Gleitpaarungseigenschaften (Mitnehmer zu Führungselement) aufweist, sondern es ist vollkommen unabhängig davon möglich, das Türmodul beispielsweise hinsichtlich einer hohen mechanischen Stabilität bezüglich der verwendeten Materialien zu optimieren und das Führungselement hinsichtlich optimierter Gleitpaarungseigenschaften auszugestalten. Durch Zusammenfügung von Führungselement und Befestigungselement kann damit eine optimale Kombination von hoher mechanischer Stabilität, optimierten Gleitpaarungseigenschaften bei einfacher und kostengünstiger Herstellung gewährleistet werden.

Nach einer Ausführungsform der Erfindung erstreckt sich das Befestigungselement über die Führungslänge des Führungselements. Damit ist gewährleistet, dass an allen Punkten des Führungselements eine optimale Übertragung von Kräften des Mitnehmers über das Führungselement auf das Befestigungselement gewährleistet ist. Damit ergibt sich eine hohe mechanische Stabilität der Fensterheberanordnung.

Nach einer weiteren Ausführungsform der Erfindung ist das Befestigungselement einstückig mit dem Türmodul ausgebildet. Dies hat den Vorteil, dass in kostengünstiger Weise in einem Herstellungsverfahren das Türmodul zusammen mit dem Befestigungselement hergestellt werden kann, was die Herstellungskosten weiter senkt.

Allerdings sei darauf verwiesen, dass es ebenso möglich ist, das Befestigungselement nachträglich am Türmodul anzubringen, beispielsweise durch entsprechende Schweiß- oder Nietverfahren oder allgemein durch Verfahren zur Herstellung einer stoff-, form- und/oder kraftschlüssigen Verbindung.

Nach einer weiteren Ausführungsform der Erfindung ist das Befestigungselement in Segmente unterteilt, wobei das Führungselement in den Segmenten durch das Befestigungselement aufgenommen ist. Durch die Unterteilung des Befestigungselementes in Segmente ergibt sich eine Material- und Gewichtseinsparung, da sich in diesem Fall das Befestigungselement nicht über die gesamte Führungslänge des Führungselementes erstrecken muss. Nichtsdestotrotz ist eine hohe mechanische Stabilität des Gesamtverbunds gewährleistet, da die bei Betätigung des Fensterhebers wirkenden Kräfte durch die Umlenkelemente direkt auf das Türmodul selbst geleitet werden, wodurch eine hohe mechanische Belastung der Führungsschiene vermieden wird.

Erfindungsgemäß weist das Befestigungselement Mittel zur formschlüssigen Fixierung des Führungselementes auf. Es handelt sich bei den Mitteln zur Fixierung um Rastmittel, wobei sich hier der Vorteil einer einfachen Montage des Führungselements am Befestigungselement ergibt.

Nach einer weiteren Ausführungsform der Erfindung sind die Umlenkelemente in Erstreckungsrichtung des Führungselements gesehen oberhalb und unterhalb des Führungselements am Türmodul angeordnet, wodurch sich eine optimale Kraftaufnahme der im Gesamtsystem wirkenden Kräfte durch das Türmodul selbst ergibt.

Nach einer weiteren Ausführungsform wird aufgrund einer leichten Flexibilität des Führungselements die Form des Führungselements durch die entsprechenden Stützstellen des Befestigungselements vorgegeben. Dies hat den Vorteil, dass für verschiedenste Befestigungselemente ein universelles Führungselement verwendet werden kann, welches sich dann jeweils flexibel an die Befestigungselemente anpasst. So kann für verschiedene Fahrzeugtypen mit verschiedenen Scheibenwölbungen trotz daher unterschiedlicher Befestigungselemente ein universelles Führungselement für den Mitnehmer der Fensterscheiben verwendet werden. Auch innerhalb eines Fahrzeugs genügt es, z.B. bei Fensterhebersystemen mit zwei nebeneinander angeordneten Führungsschienen pro Türmodul lediglich eine flexible universelle Führungsschiene bereitzuhalten, welche sich dann jeweils auf die linken und rechten Befestigungselemente des Türmoduls aufbringen lassen.

Im Übrigen ermöglicht die Verwendung eines flexiblen Führungselements die Herstellung desselben als Endlosmaterial, z.B. durch Extrudieren, und das anschließende Vorkonfektionieren auf die entsprechenden Führungslement-Größen, was eine Kostenersparnis bei der Herstellung zur Folge hat

Nach einer weiteren Ausführungsform der Erfindung handelt es sich bei dem Führungselement um eine Führungsschiene. Die Führungsschiene kann dabei beispielsweise aus Metall oder Kunststoff ausgeführt sein, wobei es zusätzlich auch noch möglich ist, dass die Führungsschiene beispielsweise mit einer reibungsvermindernden Oberflächenbeschichtung versehen ist, wodurch sich eine besonders reibungsarme und geräuscharme Führung des Fensterhebermitnehmers ergibt.

Nach einer weiteren Ausführungsform der Erfindung weist die Führungsschiene ein gerolltes oder gestanztes Profil auf. Vorzugsweise wird die Führungsschiene als Endlosmaterial hergestellt und anschließend lediglich auf die gewünschte Länge, wie sie in der Fensterheberanordnung benötigt wird, gekürzt. Damit lassen sich weiter die Herstellungskosten reduzieren.

In einem weiteren Aspekt betrifft die Erfindung eine Kraftfahrzeugtür mit einem erfindungsgemäßen Türmodul wie obig beschrieben.

Im Folgenden werden bevorzugte Ausführungsformen der Erfindung anhand der Zeichnungen näher erläutert. Es zeigen:
- Figur 1: ein Türmodul mit einer Führungsschiene,
- Figur 2: eine nicht erfindungsgemäße schematische perspektivische Ansicht eines Türmoduls mit einer Führungsschiene und einem Befestigungselement,
- Figur 3: eine nicht erfindungsgemäße schematische perspektivische Ansicht des Türmoduls der Figur 2, zusätzlich mit einem Mitnehmer,
- Figur 4: eine schematische Querschnittansicht eines Türmoduls zusammen mit einem Führungselement, einem Befestigungselement und einem Mitnehmer,
- Figur 5: eine schematische perspektivische Ansicht eines Führungselements,
- Figur 6: eine schematische perspektivische Ansicht eines Befestigungselements,
- Figur 7: eine nicht erfindungsgemäße schematische perspektivische Ansicht eines weiteren Türmoduls mit Führungsschiene, Mitnehmer und Befestigungselement.

Im Folgenden sind einander ähnliche Elemente mit denselben Bezugszeichen gekennzeichnet.

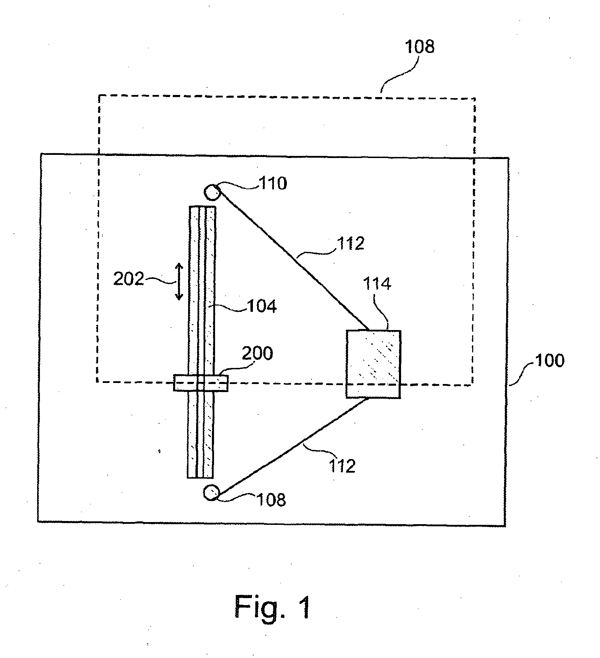

Die Figur 1 zeigt ein Türmodul 100, auf welchem eine Führungsschiene 104 angeordnet ist. Die Führungsschiene 104 dient zur Führung eines Mitnehmers 200, wobei der Mitnehmer 200 zur Aufnahme einer Fensterscheibe 108 ausgebildet ist. Die Fensterscheibe 108 ist in Richtung 202, d.h. näherungsweise in Z-Richtung des Kraftfahrzeugs und entgegen dieser näherungsweisen Z-Richtung, durch Betätigung eines Fensterhebers bewegbar.

Eine solche Bewegung erfolgt mittels des Antriebs 114, wobei im vorliegenden Fall ein elektromotorischer Antrieb vorgesehen ist. Allerdings kann es sich bei dem Antrieb 114 auch um einen manuellen Antrieb, beispielsweise um eine Handkurbel, handeln.

Der Mitnehmer 200 ist über ein Fensterheberseil 112 mit dem Antrieb 114 verbunden, wobei das Fensterheberseil 112 über Umlenkelemente 110 zwischen dem Antrieb 114 und dem Mitnehmer 200 verläuft. Die Umlenkelemente 110, beispielsweise Rollen oder statische Umlenkstücke, sind auf dem Türmodul 100 aufgesteckt oder aufgenietet und stehen nicht in mechanisch direkter Verbindung mit der Führungsschiene 104 - die Umlenkelemente 110 sind separat von der Führungsschiene 104 am Türmodul 100 angeordnet. Durch eine Bewegung des Fensters 108 wirken Kräfte in Richtung 202 auf die Umlenkelemente 110. Im Stand der Technik würden diese Kräfte direkt von der Führungsschiene 104 aufgenommen, da üblicherweise die Umlenkelemente 110 direkt an der Führungsschiene 104 angeordnet sind. Konsequenterweise muss die Führungsschiene 104 mechanisch hochstabil ausgelegt werden, um solche Kräfte aufzunehmen.

In der in Figur 1 gezeigten Ausführungsform hingegen sind die Umlenkelemente 110 am Türmodul 100 selbst befestigt, sodass entsprechend bei der Bewegung der Fensterscheibe auftretende Kräfte durch das Türmodul abgeleitet werden. Der Führungsschiene 104 kommt insofern lediglich eine Führungsfunktion zu.

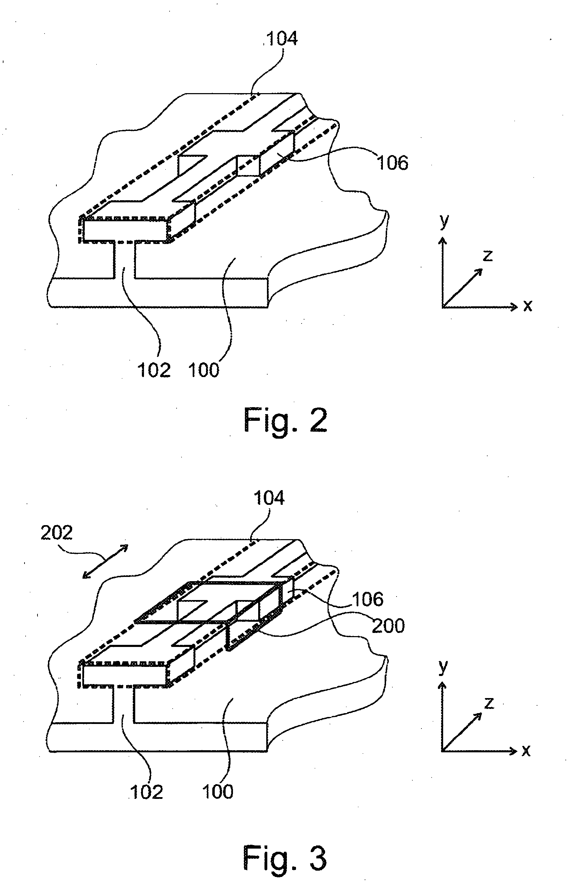

Die Figur 2 zeigt eine perspektivische schematische Ansicht eines Türmoduls 100, wobei am Türmodul 100 ein Befestigungselement 102 einstückig ausgebildet ist. Das Befestigungselement 102 weist eine T-Form auf. Ferner ist in der Figur 2 ein Führungselement 104 gezeigt, wobei das Führungselement 104 durch das Befestigungselement 102 fixiert aufgenommen ist. In der Ausführungsform der Figur 2 hintergreift das Führungselement 104 das T-förmige Befestigungselement. Bei dem Befestigungselement 102 handelt es sich in dem vorliegenden Beispiel um eine vom Türmodul 100 abstehende Rippe.

Ferner ist in der Figur 2 eine segmentierte Ausgestaltung des Befestigungselementes 102 ersichtlich, wobei die besagte T-Form lediglich in einzelnen Segmenten 106 realisiert ist. Zwischen diesen Segmenten 106 besteht eine durchgängige mechanische Verbindung in Form einer Wand, welche jedoch keine seitlich abstehenden und das Türmodul 100 überlappenden Stege aufweist. Somit ist das Führungselement lediglich in den Segmenten durch das Befestigungselement aufgenommen.

Das Führungselement ist durch das Befestigungselement fixiert aufgenommen. Dies kann beispielsweise durch eine kraft-, form- oder stoffschlüssige Verbindung zwischen Befestigungselement 102 und Führungselement 104 realisiert sein.

In der Figur 3 ist die Anordnung der Figur 2 nochmals gezeigt, wobei zusätzlich nun ein Mitnehmer 200 einer Fensterheberanordnung skizziert ist. Dieser Mitnehmer dient zur Halterung einer hier nicht gezeigten Fensterscheibe. Er sichert, wie bereits oben im Detail erwähnt, die Fensterscheibe gegen unbeabsichtigtes Verdrehen sowie gegebenenfalls auch gegen ungewollte Bewegungen in Y-Richtung.

Der Mitnehmer 200 kann in Richtung 202, d.h. in Z-Richtung, auf dem Führungselement 104 gleiten. Da das Befestigungselement 102 und das Führungselement 104 zueinander separate Bauteile darstellen, kann dabei die Materialwahl sowohl des Befestigungselementes als auch des Führungselementes für unterschiedliche Anforderungen optimiert ausfallen. Beispielsweise kann hinsichtlich der Materialwahl des Befestigungselementes 102 eine hohe mechanische Stabilität gefordert sein, wohingegen hinsichtlich der Materialwahl des Führungselementes 104 eine gute Gleitpaarung "Mitnehmer zu Führungselement" gefordert sein kann. Somit kann eine optimale Kombination von hoher mechanischer Stabilität bei niedrigem Reibungskoeffizient des Mitnehmers 200 auf dem Führungselement 104 im gesamten Betriebstemperaturbereich gewährleistet werden, was im Übrigen zu einer hohen Verschleißfestigkeit über eine vorgegebene Teilelebensdauer führt und unter umständen ein geräuschoptimiertes Gleiten ohne jegliche Schmierstoffe ermöglichen kann. Damit ist im Übrigen auch eine Wartungsfreiheit des Systems gewährleistet.

Hinsichtlich der geometrischen Ausgestaltung von Führungselement 104 und Mitnehmer 200 besteht aufgrund der Unabhängigkeit des Herstellungsvorgangs des Türmoduls 100 eine hohe Gestaltungsfreiheit. Bei der Herstellung des Türmoduls 100 kann somit trotz einer etwaig komplexer geometrischer Ausgestaltung des Führungselements 104 beispielsweise auf aufwendige Werkzeuge im Falle einer Spritzgussherstellung des Türmoduls 100 verzichtet werden, da etwaige Hinterschnitte des Türmoduls aufgrund des Wegfallens des Führungselements 104 ebenfalls entfallen.

Insgesamt ergeben sich damit die Vorteile einer niedrigen Werkzeugkomplexität für den Modulträger, niedrige Werkzeugkosten für z. B. extrudierte Profilschienen, wobei extrudierte Profilschienen eine höhere Herstellungsrate für die Standardisierung in verschiedenen Projekten und Fahrzeugen ermöglichen.

So ist es nun beispielsweise möglich, dass die Führungsschiene ein Z- oder ein L-Profil aufweist, was den zusätzlichen Vorteil hat, dass eine Führung des Mitnehmers sowohl eine Verdrehung des Mitnehmers um die Y- und X-Achse des Kraftfahrzeugs verhindert als auch sichergestellt wird, dass der Mitnehmer in Y-Richtung des Kraftfahrzeugs keine ungewollte Bewegung durchführen kann. Es sei angemerkt, dass allgemein die X-Richtung des Kraftfahrzeugs als die Längsrichtung des Kraftfahrzeugs bezeichnet wird, und die Y-Richtung die Querrichtung des Kraftfahrzeugs angibt und die Z-Richtung senkrecht zum Boden des Kraftfahrzeugs verläuft.

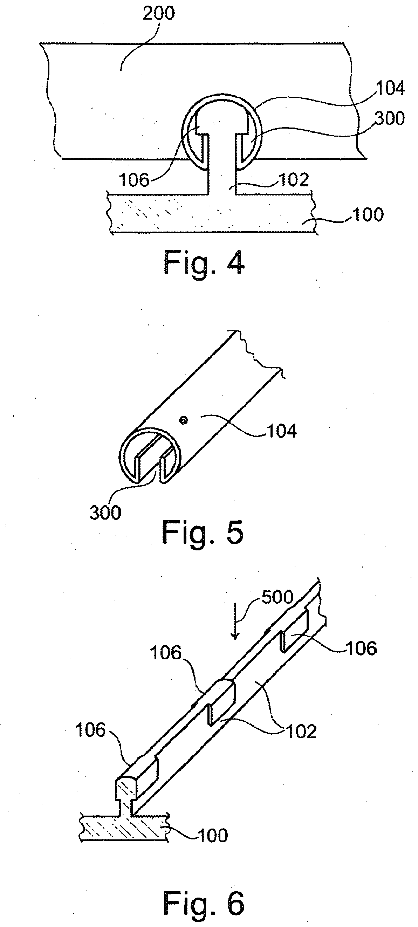

Die Figur 4 zeigt eine Querschnittansicht eines Türmoduls 100, wobei das Türmodul ein Befestigungselement 102 aufweist. Das Befestigungselement 102 weist wiederum eine T-Form auf, wobei die das Türmodul 100 überlappenden Stege des T-förmigen Befestigungselements von entsprechenden gegenstückigen Rastnasen eines Führungselementes 104 hintergriffen werden. Das Führungselement 104 ist in der Figur 4 auf das Befestigungselement 102 aufgesteckt - das Führungselement ist durch das Befestigungselement fixiert aufgenommen.

Das Führungselement 104 weist eine bogenförmige Gleitfläche auf, welche wiederum teilweise von einer gegenstückigen Gleitfläche eines Mitnehmers 200 umschlossen ist. Durch die Rastelemente 300 des Führungselements 104 sowie der bogenförmigen Oberflächengestaltung des Führungselements 104 ergibt sich insgesamt eine federnde bzw. elastische Anordnung, welche in einfacher Weise auf das Befestigungselement 102 aufsteckbar und mit diesem verrastbar ist.

In der Figur 5 ist perspektivisch das Führungselement 104 gezeigt. Im vorliegenden Fall handelt es sich bei dem Führungselement 104 um eine Führungsschiene. Diese Führungsschiene kann auf das in Figur 6 gezeigte Befestigungselement 102 durch eine einfache Bewegung in Richtung 500 geclipst werden. Ähnlich wie bereits hinsichtlich Figur 2 diskutiert weist auch das Befestigungselement 102 der Figur 6 eine segmentierte T-förmige Ausgestaltung auf, wobei die Führungsschiene 104 der Figur 5 lediglich in den Bereichen der Segmente 106 durch die Rastelemente 300 gehaltert ist.

Es sei angemerkt, dass im Falle einer segmentierten Ausgestaltung des Befestigungselements 102 eine ausreichend hohe mechanische Stabilität auch dann gegeben ist, wenn entsprechende Rastelemente 300 der Führungsschiene 104 ebenfalls nur segmentiert an der Führungsschiene 104 angeordnet sind.

Zusätzlich zur Fixierung der Führungsschiene 104 am Befestigungselement 102 ist es auch möglich, beispielsweise durch entsprechende stoffschlüssige Verbindungsverfahren eine zusätzliche Anbindung der Führungsschiene 104 am Befestigungselement 102 zu gewährleisten.

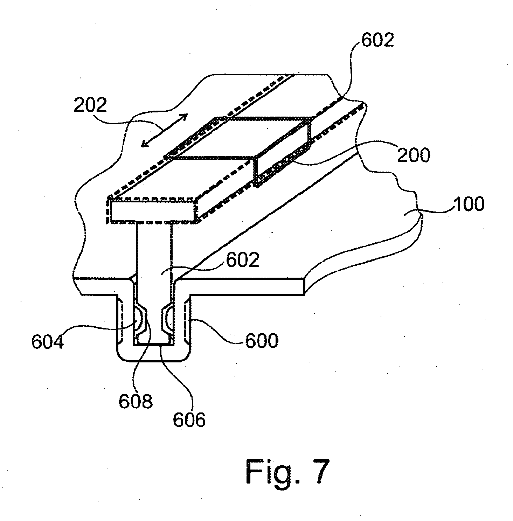

Die Figur 7 zeigt eine weitere perspektivische schematische Ansicht eines Türmoduls 100, wobei im Gegensatz zu den Ausführungsformen der Figuren 2 - 6 als Befestigungselement 102 keine vom Türmodul 300 abstehende Rippe zum Einsatz kommt. Es handelt sich hier bei dem Befestigungselement um eine Nut 600. Diese Nut 600 ist zur Aufnahme des Führungselements 602 ausgebildet, wobei im vorliegenden Fall das Führungselement 602 T-förmig ausgebildet ist. Durch gegenstükkige Rastelemente 604 und 608 am Befestigungselement bzw. am Führungselement 602 wird eine Fixierung des Führungselements 602 am Befestigungselement 600 gewährleistet. Zusätzlich ist es auch noch möglich, beispielsweise im Bereich 606, d.h. der Auflagefläche von Befestigungselement 602 und Nutboden 600, eine weitere Fixierung vorzusehen, beispielsweise in Form von Nieten, Schrauben oder aber durch eine stoffschlüssige Verbindung.

Insgesamt liegen somit in der Ausführungsform der Figur 7 die beiden separaten Bauteile Türmodul 100 und Führungselement 602 vor, wobei das Führungselement 602 in einer entsprechenden Aufnahme, nämlich der Nut 600 des Türmoduls 100, aufgenommen ist. Eine Führung des Mitnehmers 200 wird dadurch realisiert, dass der Mitnehmer 200 am Quersteg des T-förmigen Führungselements 602 angeordnet ist. Beispielsweise ist es möglich, dass der Mitnehmer 200 das T-förmige Führungselement 602 hintergreift. Insgesamt ist so wiederum eine Gleitbewegung des Mitnehmers 200 auf dem Führungselement 104 in Richtung 202 gewährleistet.

### Bezugszeichenliste

- 100: Türmodul
- 102: Befestigungselement
- 104: Führungselement
- 106: Segment
- 108: Fensterscheibe
- 110: Umlenkstück
- 112: Fensterheberseil
- 114: Fensterhebermotor
- 200: Mitnehmer
- 202: Richtung
- 300: Rastelement
- 500: Richtung
- 600: Nut
- 602: Führungselement
- 604: Rastelement
- 606: Fläche
- 608: Rastelement

## Patentansprüche

1. Türmodul (100) für eine Kraftfahrzeugtür mit einer Fensterheberanordnung, wobei die Fensterheberanordnung zumindest zwei Umlenkstücke (108), zumindest ein Führungselement (104) und zumindest einen Mitnehmer (200) für eine Fensterscheibe (108) aufweist, wobei das Türmodul (100) zumindest ein T-förmiges Befestigungselement (102) aufweist, wobei das Führungselement (104) durch das Befestigungselement (102) fixiert aufgenommen ist, wobei das Führungselement (104) das Befestigungselement (102) durch Rastelemente (300) hintergreift, wobei das Befestigungselement (102) eine vom Türmodul abstehende Rippe ist, wobei das Führungselement (104) zur Führung einer Bewegung des Mitnehmers (200) in eine Bewegungsrichtung ausgebildet ist, wobei der Mitnehmer über ein über die Umlenkstücke (108) umgelenktes Seil (112) mit einem Fensterheberantrieb (114) verbunden ist, wobei die Umlenkstücke (108) separat von dem Führungselement (104) am Türmodul (100) angeordnet sind, wobei das Führungselement (104) eine in einer senkrecht zur Bewegungsrichtung des Mitnehmers (200) liegenden Querschnittsebene bogenförmige Gleitfläche aufweist, wobei diese teilweise von einer gegenstückigen Gleitfläche des Mitnehmers (200) umschlossen ist, wobei sich durch die Rastelemente (300) des Führungselements (104) sowie der bogenförmigen Oberflächengestaltung des Führungselements (104) insgesamt eine elastische Anordnung ergibt, wobei Stege des T-förmigen Befestigungselements (102) von entsprechenden gegenstückigen Rastnasen der Rastelemente (300) des Führungselements (104) hintergriffen werden, wobei das Befestigungselement (102) die T-Form in der senkrecht zur Bewegungsrichtung des Mitnehmers (200) liegenden Querschnittsebene aufweist.

2. Türmodul (100) nach Anspruch 1, wobei sich das Befestigungselement (102) über die Führungslänge des Führungselements erstreckt.

3. Türmodul (100) nach Anspruch 1 oder 2, wobei das Befestigungselement (102) einstückig mit dem Türmodül (100) ausgebildet ist.

4. Türmodul (100) nach Anspruch 1 - 3, wobei das Befestigungselement (102) in Segmente unterteilt ist, wobei das Führungselement (104) in den Segmenten durch das Befestigungselement (102) aufgenommen ist.

5. Türmodul (100) nach einem der vorigen Ansprüche, wobei die Umlenkelemente in Erstreckungsrichtung des Führungselements gesehen oberhalb und unterhalb des Führungselements am Türmodul (100) angeordnet sind.

6. Türmodul (100) nach einem der vorigen Ansprüche, wobei es sich bei dem Führungselement (104) um eine Führungsschiene handelt.

7. Türmodul (100) nach Anspruch 6, wobei die Führungsschiene in Metall oder Kunststoff ausgeführt ist.

8. Türmodul (100) nach Anspruch 6 oder 7, wobei die Führungsschiene ein gerolltes oder gestanztes Profil aufweist.

9. Kraftfahrzeugtür mit einem Türmodul (100) nach einem der vorigen Ansprüche.

## Claims

1. A door module (100) for a motor vehicle door, comprising a window lift mechanism, wherein the window lift mechanism comprises at least two deflection pieces (108), at least one guide element (104), and at least one driver (200) for a window pane (108), wherein the door module (100) comprises at least one T-shaped fastening element (102), wherein the guide element (104) is fixedly received by the fastening element (102), wherein the guide element (104) engages the fastening element (102) from behind by means of detent elements (300), wherein the fastening element (102) is a rib projecting from the door module, wherein the guide element (104) is designed to guide a movement of the driver (200) in a movement direction, wherein the driver is connected to a window lift drive (114) via a cable (112) deflected via the deflection pieces (108), wherein the deflection pieces (108) are arranged on the door module (100) separately from the guide element (104), wherein the guide element (104) comprises an arcuate sliding surface in a cross-sectional plane lying perpendicularly to the movement direction of the driver (200), wherein this sliding surface is partially surrounded by a mating sliding surface of the driver (200), wherein on the whole an elastic arrangement is provided by the detent elements (300) of the guide element (104) and also the arcuate surface design of the guide element (104), wherein protrusions of the T-shaped fastening element (102) are engaged from behind by corresponding mating detent lugs of the detent elements (300) of the guide element (104), wherein the fastening element (102) has the T shape in the cross-sectional plane lying perpendicularly to the movement direction of the driver (200).

2. The door module (100) according to claim 1, wherein the fastening element (102) extends over the guiding length of the guide element.

3. The door module (100) according to claim 1 or 2, wherein the fastening element (102) is integrally designed with the door module (100).

4. The door module (100) according to claims 1 to 3, wherein the fastening element (102) is divided into segments, wherein the guide element (104) is received in the segments by the fastening element (102).

5. The door module (100) according to any one of the preceding claims, wherein the deflection elements are disposed on the door module (100) above and beneath the guide element, as seen looking in the extension direction of the guide element.

6. The door module (100) according to any one of the preceding claims, wherein the guide element (104) is a guide rail.

7. The door module (100) according to claim 6, wherein the guide rail is made of metal or plastic.

8. The door module (100) according to claim 6 or 7, wherein the guide rail has a rolled or stamped profile.

9. A motor vehicle door, comprising a door module (100) according to any one of the preceding claims.

## Revendications

1. Module de portière (100) pour une portière de véhicule automobile avec un système lève-vitres, dans lequel le système lève-vitres comporte au moins deux pièces de déviation (108), au moins un élément de guidage (104) et au moins un entraîneur (200) pour une vitre de fenêtre (108), le module de portière (100) comportant au moins un élément de fixation (102) en forme de T, l'élément de guidage (104) étant admis fixement par l'élément de fixation (102), l'élément de guidage (104) venant en prise derrière l'élément de fixation (102) par des éléments de butée (300), l'élément de fixation (102) étant une nervure faisant saillie sur le module de portière, l'élément de guidage (104) étant conçu pour guider un mouvement de l'entraîneur (200) dans une direction de déplacement, l'entraîneur étant relié à un entraînement du lève-vitres (114) par un câble (112) dévié par les pièces de déviation (108), les pièces de déviation (108) étant agencées séparément de l'élément de guidage (104) sur le module de portière (100), l'élément de guidage (104) présentant une surface de coulissement cintrée dans un plan transversal situé perpendiculairement par rapport à la direction de déplacement de l'entraîneur (200), cette surface étant entourée partiellement par une surface de coulissement de l'entraîneur (200) complémentaire, où, par les éléments de butée (300) de l'élément de guidage (104) ainsi que par la conception de surface en forme d'arc de l'élément de guidage (104), l'ensemble forme un agencement élastique, les barres de l'élément de fixation (102) en forme de T venant en prise derrière les épaulements de butée des éléments de butée (300) de l'élément de guidage (104), l'élément de fixation (102) présentant la forme en T dans le plan transversal situé perpendiculairement par rapport à la direction de déplacement de l'entraîneur (200).

2. Module de portière (100) selon la revendication 1, dans lequel l'élément de fixation (102) s'étend sur la longueur de guidage de l'élément de guidage.

3. Module de portière (100) selon la revendication 1 ou 2, dans lequel l'élément de fixation (102) est conçu d'une seule pièce avec le module de portière (100).

4. Module de portière (100) selon les revendications 1 à 3, dans lequel l'élément de fixation (102) est divisé en segments, dans lequel l'élément de guidage (104) est admis dans les segments par l'élément de fixation (102).

5. Module de portière (100) selon l'une des revendications précédentes, dans lequel, vu dans la direction d'extension de l'élément de guidage, les éléments de déviation sont agencés au-dessus et en-dessous de l'élément de guidage sur le module de portière (100).

6. Module de portière (100) selon l'une des revendications précédentes, dans lequel, dans le cas de l'élément de guidage (104), il s'agit d'un rail de guidage.

7. Module de portière (100) selon la revendication 6, dans lequel le rail de guidage est conçu en métal ou en matière plastique.

8. Module de portière (100) selon la revendication 6 ou 7, dans lequel le rail de guidage comporte un profil roulé ou estampé.

9. Portière de véhicule automobile avec un module de portière (100) selon l'une des revendications précédentes.
